# EUROPÄISCHE PATENTSCHRIFT

(11) **EP 0 985 355 B1**
(45) Veröffentlichungstag und Bekanntmachung des Hinweises auf die Patenterteilung: **27.11.2002**
(21) Anmeldenummer: 99111829.0
(22) Anmeldetag: 19.06.1999
(51) Int. Cl.: A41D 31/00

(54) **Halbzeugmaterial zur Herstellung von Schutzbekleidung sowie Verfahren zu seiner Herstellung**
Semi-finished composite material for manufacturing protective garments and method of manufacture
Produit composite semi-fini pour la fabrication de vêtements protecteurs et méthode de fabrication

(30) Priorität: 01.09.1998 DE 19839758
(43) Veröffentlichungstag der Anmeldung: 15.03.2000
(73) Patentinhaber: Carl Freudenberg KG, 69469 Weinheim (DE)
(72) Erfinder: Schäfer, Werner, 69488 Birkenau (DE); Grynaeus, Peter, Dr., 69488 Birkenau (DE); Retting, Hans, 64646 Heppenheim (DE)

(56) Entgegenhaltungen:
- EP-A- 0 323 763
- EP-A- 0 364 370
- EP-A- 0 501 080
- EP-A- 0 819 389
- WO-A-97/22385
- US-A- 5 279 878

## Beschreibung

Die Erfindung betrifft ein Halbzeugmaterial zur Herstellung von einem Oberstoff aufweisender Schutzbekleidung, insbesondere einer Feuerwehrschutzbekleidung, welches eine einlagige Verarbeitung zusammen mit einem Oberstoff erlaubt, und Verfahren zur Herstellung des Halbzeugmaterials.

Ein solches Halbzeugmaterial und Verfahren ist bekannt von Dokument EP.A.0501080.

Ein derartiges Halbzeug muß für seine Eignung als Einlagestoff für eine Feuerwehreinsatzbekleidung den Träger gegen Hitzeeinwirkung durch Strahlung und Flamme schützen, darf also nicht entflammbar sein. Weiterhin muß die Feuerwehreinsatzbekleidung den Träger gegen Eindringen von Löschwasser und flüssiger Chemikalien schützen und dabei gleichzeitig atmungsaktiv sein. Die Anforderungen sind in der EN 469 oder der HuPF (Herstellungs- und Prüfungsbeschreibung für eine universelle Feuerwehrschutzkleidung) festgelegt. Feuerwehrjacken nach HuPF bestehen grundsätzlich aus den folgenden wesentlichen Komponenten: Einem Oberstoff, meistens aus Aramid oder Amidimid, einer Feuchtesperre, oftmals eine semipermeable Membran kaschiert auf einem textilem Träger, sowie einem Isolationsfutter, meist ein Steppverbund aus HR-Nadelvliesstoff oder HR-Gewirke mit Futterstoff aus HR-Fasern.

Die Feuchtesperre kann direkt auf den Oberstoff kaschiert sein, meist jedoch ist diese als separate Funktionsschicht bestehend aus Membran und Träger zwischen Oberstoff und Insolationsfutter eingearbeitet.

Weiterhin sind Laminate von Membranen mit Isolationsfutter auf der Basis von Nadelvliesstoffen mit Futterstoff bekannt, bei dem ein Futterstoff mit einem Flächengewicht von 120 bis 150g/m² mit einem Nadelvliesstoff mit einem Flächengewicht von 200 bis 260 g/m² versteppt ist, wobei das Flächengewicht des Nadelvliesstoffes von 200 bis 260 g/m² aus HR-Fasern besteht und zur Sicherstellung der Wärmedämmwerte erforderlich ist. Anstelle der laminierten Membran kann eine separate Feuchtesperre bestehend aus Membrane plus Träger mit einem Flächengewicht von 120 bis 150 g/m² vorgesehen sein.

Zwar entsprechen die vorstehend beschriebenen Kombinationen den Vorschriften nach EN 469 und HuPF, sie sind im allgemeinen jedoch relativ schwer und wenig flexibel, worunter der Tragekomfort leidet.

Gemäß der Erfindung wird eine leichte, sehr flexible und somit komfortable Einlage zur verarbeitende Schicht mit multifunktionellen Eigenschaften hergestellt, umfassend ein Isolationsfutter gemäß des Anspruchs 1, bestehend aus einem wenigstens zweilagigen wasserstrahlverfestigten Vliesstoff mit einem Flächengewicht von 80g/m² oder leichter je Einzellage, der mit einem Futterstoff mit einem Flächengewicht von 120 g/m² versteppt ist, und eine semipermeable Membran als Feuchtigkeitssperre, die nach dem Versteppen des wenigstens zweilagigen, wasserstrahlverfestigten Vliesstoffs auf die äußere, dem Futterstoff abgewandte Seite der Vliesstofflage mit einem Flächengewicht von 20 bis 30 g/m² kaschiert ist.

Der mehrlagige Aufbau des versteppten Isolationsfutters aus leichten, wasserstrahlverfestigten Vliesstoffen ermöglicht durch den hohen Lufteinschluß und der damit einhergehenden verstärkten Isolationswirkung eine deutliche Reduzierung des Gesamtgewichts und damit einen wesentlich verbesserten Tragekomfort durch die geringere Dichte des Gesamtverbundes.

Das Halbzeugmaterial erreicht insgesamt ein Flächengewicht von 270 bis 280 g/m², nämlich bei zwei Lagen eines wasserstrahlverfestigten Vliesstoffs mit jeweils 80 g/m² zunächst 160 g/m², die mit dem Futterstoff von 120 g/m² versteppt ein Gesamtgewicht von höchstens 280 g/m² ergeben.

Die zur Einhaltung der Wärmedämmungswerte nach EN 366 (Wärmedurchgang bei Einwirkung einer Strahlungsquelle von 40 kW/m² und EN 367 (Wärmedurchgang bei Flammeneinwirkung) erforderlichen Flächenmaße des Vliesstoffes von 200 bis 260 g/m² wird gleichwohl erreicht.

Anstelle zweier Lagen mit einem Flächengewicht von jeweils 80 g/m² ist es auch möglich, drei Lagen eines wasserstrahlverfestigten Vliesstoffs mit jeweils 50 g/m² zu verwenden und diese mit dem Futterstoff zu versteppen. Hierdurch wird ein Gesamtgewicht von 270 g/m² erreicht. Dabei wird trotz Verringerung des Flächengewichts durch die zusätzliche Lage eine ausreichende Isolationswirkung erzielt.

Durch die Kaschierung des semipermeablen Membran auf die äußere Vliesstofflage erfüllt das Halbzeugmaterial bei einer Flächengewichtserhöhung von 20 bis 30 g/m² gleichzeitig die Funktion als Nässesperre bei Beibehaltung des beschriebenen Tragekomforts.

Der wasserstrahlverfestigte Vliesstoff kann vorteilhafterweise aus m- oder p-Aramidfasern, aus Melaminharzfasern, aus Phenolharzfasern, aus Polyimidfasern,aus PB-Fasern oder aus einer Mischung aus diesen Faserstoffen bestehen.

Weiterhin ist es möglich, daß die einzelnen Lagen des wasserstrahlverfestigten Vliesstoffs aus unterschiedlichen, vorstehend erwähnten Materialien bestehen.

Vorteilhafterweise wird die Membran mittels feuchtevernetzender Polyurethanhaftmasse laminiert.

Weiterhin stellt sich das Problem, ein Verfahren zur Herstellung eines Halbzeugmaterials bereitzustellen gemäß des Anspruchs 11, welches leicht,. sehr flexibel und mit komfortabel einlagig zu verarbeiten ist und multifunktionelle Eigenschaften aufweist. Durch die Verbindung zweier wasserstrahlverfestigter Einzellagen eines Vliesstoffes mit einem Futterstoff mittels Versteppung und der anschließenden Beschichtung der Seite des Vliesstoffs mit einer semipermeablen Membran mit den jeweils angegebenen höchsten Flächengewichten wird ein Halbzeugmaterial mit einem deutlich reduzierten Gesamtgewicht bei wesentlich verbessertem Tragekomfort geschaffen.

Die Verbindung der Membran mit der äußeren Vliesstoffschicht mittels eines feuchtevernetzenden Polyurethanhaftmasse hat den Vorteil, daß der Tragekomfort beibehalten werden kann.

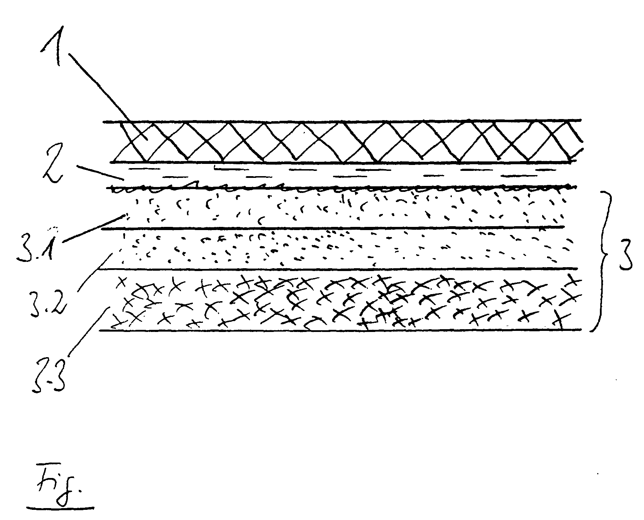

In der Zeichnung ist ein Schnitt durch eine Feuerwehrschutzkleidung dargestellt. Die Schutzbekleidung umfaßt einen Oberstoff 1, der auf eine semipermeable Membran 2 im wesentlichen ohne Verbindung mit desselben aufgelegt ist. Die Membran 2 ist semipermeable, d.h., daß die Membran einerseits wasserdampfdurchlässig ist und andererseits wasserdicht ist. Die Porengröße kann dabei so gewählt werden, daß auch andere Flüssigkeiten die Membran nicht durchdringen. Hierdurch wird eine Nässesperre für Löschwasser oder andere Chemikalien erreicht.

Die Membran 2 ist mittels feuchteversnetzender Polyurethanhaftmasse mit einem Vliesstoff 3 laminiert, angedeutet durch den unregelmäßig gezeichneten Kontaktbereich zwischen der Membran 2 und dem Isolationsfutter 3.

Das Isolationsfutter 3 besteht aus einem zweilagigen Vliesstoff 3.1 bis 3.2 und einem Futterstoff 3.3. Der zweilagige Vliesstoff 3.1 bis 3.2 besteht aus zwei Einzellagen 3.1, 3.2 mit einem Lagengewicht von 80g/m² oder leichter. Die Einzellagen sind jeweils in sich wasserstrahlverfestigt.

Der Futterstoff 3.3 weist ein Flächengewicht von 120 g/m² oder leichter auf und ist als Nadelvliesstoff oder Gewirke in bekannter Art und Weise ausgeführt.

Das Isolationsfutter wird durch Versteppen des Futterstoffs 3.3 mit den Einzellagen 3.1, 3.2 des wasserstrahlverfestigten Vliesstoffs 3.1 bis 3.2 hergestellt. Diese Versteppung ist in der Zeichnung nicht dargestellt. Durch die Versteppung wird ein einlagig zu verarbeitendes Halbzeugmaterial erhalten, das in bekannter Art und Weise an geeigneten Stellen mit dem Obermaterial verbunden werden kann.

Die semipermeable Membran 2 wird nach dem Versteppen der einzelnen Lagen 3.1, 3.2 und des Futterstoffs 3.3 auf die äußere Vliesstofflage aufkaschiert, wodurch dieses Isolationsfutter bei einer Gewichtserhöhung von nur 20 bis 30g/m² gleichzeitig die Funktion als Nässesperre bei Beibehaltung des Tragekomforts erfüllt.

Die Auswahl der Anzahl von Lagen des verfestigten Vliesstoffes und des Futterstoffes hängt insgesamt von dem mindestens zu erreichenden Gesamtflächengewicht des Vliesstoffes aus HR-Fasern ab, das 200 bis 260 g/m² betragen muß, um die Wärmedämmwerte zu erreichen.

## Patentansprüche

1. Halbzeugmaterial zur Herstellung von einen Oberstoff (1) aufweisender Schutzbekleidung, insbesondere von Feuerwehrschutzbekleidung, umfassend:
- ein Isolationsfutter (3), bestehend aus einem wenigstens zweilagigen wasserstrahlverfestigten Vliesstoff (3.1, 3.2) mit einem Flächengewicht von 80 g/m² oder leichter je Einzellage (3.1, 3.2),
einem Futterstoff (3.3) mit Flächengewicht von 120 g/m² oder leichter, der mit dem wenigstens zweilagigen Vliesstoff (3.1, 3.2) versteppt ist, und
eine semipermeable Membran (2) als Feuchtigkeitssperre, die nach dem Versteppen des wenigstens zweilagigen, wasserstrahlverfestigten Vliesstoffes (3.1, 3.2) mit dem Futterstoff (3.3) auf die äußere, dem Futterstoff (3.3) abgewandte Seite der Vliesstofflage (3.1-3.2) mit einem Flächengewicht von 20 bis 30 g/m² kaschiert ist.

2. Halbzeug nach Anspruch 1, **dadurch gekennzeichnet, daß** der wasserstrahlverfestigte Vliesstoff (3.1-3.2) aus m- oder p-Aramidfasern besteht.

3. Halbzeugmaterial nach Anspruch 1, **dadurch gekennzeichnet, daß** der wasserstrahlverfestigte Vliesstoff (3.1-3.2) aus Melaminharzfasern besteht.

4. Halbzeugmaterial nach Anspruch 1, **dadurch gekennzeichnet, daß** der wasserstrahlverfestigte Vliesstoff (3.1-3.2) aus Phenolharzfasern besteht.

5. Halbzeugmaterial nach Anspruch 1, **dadurch gekennzeichnet, daß** der wasserstrahlverfestigte Vliesstoff (3.1-3.2) aus Polyamidimidfasern besteht.

6. Halbzeugmaterial nach Anspruch 1, **dadurch gekennzeichnet, daß** der wasserstrahlverfestigte Vliesstoff aus Polyamidfasern besteht.

7. Halbzeugmaterial nach Anspruch 1, **dadurch gekennzeichnet, daß** der wasserstrahlverfestigte Vliesstoff ((3.1-3.2) aus PB-Fasern besteht.

8. Halbzeugmaterial nach Anspruch 1, **dadurch gekennzeichnet, daß** der wasserstrahlverfestigte Vliesstoff (3.1-3.2) aus einer Mischung aus den Faserstoffen nach den Patentansprüchen 2 bis 7 besteht.

9. Halbzeugmaterial nach einem der Ansprüche 1 bis 8, **dadurch gekennzeichnet, daß** die einzelnen Lagen (3.1, 3.2) des wasserstrahlverfestigten Vliesstoffes (3.1-3.2) aus unterschiedlichen Materialen gemäß einem oder mehreren der Ansprüchen 2 bis 7 bestehen.

10. Halbzeugmaterial nach den Ansprüchen 1 bis 9, **dadurch gekennzeichnet, daß** die Membran mittels feuchtevernetzender Polyurethanhaftmasse laminiert ist.

11. Verfahren zur Herstellung eines Halbzeugmaterials zur Herstellung von Schutzbekleidung, umfassend folgende Schritte:
Bereitstellung einer ersten Einzellage (3.1) eines wasserstrahlverfestigten Vliesstoffes mit einem Flächengewicht von 80 g/m² oder leichter;
Bereitstellung einer zweiten Einzellage (3.2) eines wasserstrahlverfestigten Vliesstoffes ebenfalls mit einem Flächengewicht von 80g/m² oder leichter;
Bereitstellung eines Futterstoffs mit einem Flächengewicht von 120 g/m² oder leichter;
verbinden der Einzellagen (3.1, 3.2) und des Futterstoffs (3.3), beispielsweise durch Versteppung;
Kaschierung des versteppten Verbundes aus Vliesstoffen (3.1, 3.2) und Futterstoff (3.3) auf der äußeren, dem Futterstoff abgewandten Seite des Vliesstoffs (3.1-3.2) einer semipermeablen Membran (2) mit einem Flächengewicht von 20 bis 30 g/m².

12. Verfahren zur Herstellung eines Halbzeugmaterials nach Anspruch 11, **dadurch gekennzeichnet, daß** vor der Kaschierung der Membran (2) eine feuchtevernetzende Polyurethanhaftmasse auf der Membran und/oder auf dem Vliesstoff aufgebracht ist.

## Claims

1. A semi-finished material for producing protective clothing having an outer shell (1), especially for producing firefighters protective clothing, comprising:
- a thermal liner (3) composed of an at least two-ply hydroentangled nonwoven (3.1, 3.2) having a basis weight of 80 g/m² or less per individual ply (3.1, 3.2) and of a face cloth fabric (3.3) having a basis weight of 120 g/m² or less that is quilted together with the at least two-ply nonwoven (3.1, 3.2), and
- a semipermeable membrane (2) moisture barrier which has a basis weight of 20 to 30 g/m² and which, after the quilting of the at least two-ply hydroentangled nonwoven (3.1, 3.2) with the face cloth fabric (3,3), has been laminated onto that outer face of the nonwoven ply (3.1-3.2) that is remote from the face cloth fabric (3.3).

2. A semi-finished material according to claim 1, **characterized in that** the hydroentangled nonwoven (3.1-3.2) is composed of m- or p-aramid fibres.

3. A semi-finished material according to claim 1. **characterized in that** the hydroentangled nonwoven (3.1-3.2) is composed of melamine resin fibres.

4. A semi-finished material according to claim 1, **characterized in that** the hydroentangled nonwoven (3.1-3.2) is composed of phenolic resin fibres.

5. A semi-finished material according to claim 1, **characterized in that** the hydroentangled nonwoven (3.1-3.2) is composed of polyamideimide fibres.

6. A semi-finished material according to claim 1, **characterized in that** the hydroentangled nonwoven is composed of polyamide fibres.

7. A semi-finished material according to claim 1, **characterized in that** the hydroentangled nonwoven (3.1-3.2) is composed of PB fibres.

8. A semi-finished material according to claim 1, **characterized in that** the hydroentangled nonwoven (3.1-3.2) is composed of a mixture of the fibre materials according to claims 2 to 7.

9. A semi-finished material according to any of claims 1 to 8, **characterized in that** the individual plies (3.1, 3.2) of the hydroentangled nonwoven (3.1-3.2) are composed of different materials as set forth in one or more of claims 2 to 7.

10. A semi-finished material according to any of claims 1 to 9, **characterized in that** the membrane is laminated using moisture-crosslinking polyurethane adhesive.

11. A process for producing a semi-finished material for producing protective clothing, which comprises the following steps:
providing a first individual ply (3.1) of a hydroentangled nonwoven having a basis weight of 80 g/m² or less;
providing a second individual ply (3.2) of a hydroentangled nonwoven having a basis weight of 80 g/m² or less;
providing a face cloth fabric having a basis weight of 120 g/m² or less;
assembling the individual plies (3.1, 3.2) and the face cloth fabric (3.3) together, for example by quilting;
laminating the quilted assembly of nonwovens (3.1, 3.2) and face cloth fabric (3.3) on that outer face of the nonwoven (3.1 - 3.2) that is remote from the face cloth fabric with a semipermeable membrane (2) having a basis weight of from 20 to 30 g/m².

12. A process for producing a semi-finished material according to claim 11, **characterized in that** a moisture-crosslinking polyurethane adhesive is applied to the membrane and/or to the nonwoven prior to the laminating of the membrane (2).

## Revendications

1. Produit composite semi-fini pour la fabrication de vêtements protecteurs munis d'un tissu supérieur (1), en particulier de vêtements protecteurs destinés aux sapeurs-pompiers, comprenant :
- une doublure isolante (3), constituée d'un tissu non-tissé (3.1, 3.2) à au moins deux couches rendu résistant aux jets d'eau d'un grammage de 80 g/m² ou inférieur par couche (3.1, 3.2),
- un tissu de doublure (3.3) d'un grammage de 120 g/m² ou inférieur, qui est piqué sur le tissu non-tissé (3.1, 3.2) à au moins deux couches, et
- une membrane semi-perméable (2) comme barrière d'humidité, qui après piquage du tissu non-tissé (3.1, 3.2) à au moins deux couches rendu résistant aux jets d'eau sur le tissu de doublure (3.3), est contrecollée sur la face extérieure opposée au tissu de doublure (3.3) de la couche de non-tissé (3.1-3.2), avec un grammage compris entre 20 et 30 g/m².

2. Produit composite semi-fini selon la revendication 1, **caractérisé en ce que** le tissu non-tissé (3.1-3.2) rendu résistant aux jets d'eau est composé de fibres de m-aramide ou de p-aramide.

3. Produit composite semi-fini selon la revendication 1, **caractérisé en ce que** le tissu non-tissé (3.1-3.2) rendu résistant aux jets d'eau est composé de fibres de résine de mélamine.

4. Produit composite semi-fini selon la revendication 1, **caractérisé en ce que** le tissu non-tissé (3.1-3.2) rendu résistant aux jets d'eau est composé de fibres de résine phénolique.

5. Produit composite semi-fini selon la revendication 1, **caractérisé en ce que** le tissu non-tissé (3.1-3.2) rendu résistant aux jets d'eau est composé de fibres de polyamideimide.

6. Produit composite semi-fini selon la revendication 1, **caractérisé en ce que** le tissu non-tissé rendu résistant aux jets d'eau est composé de fibres de polyamide.

7. Produit composite semi-fini selon la revendication 1, **caractérisé en ce que** le tissu non-tissé (3.1-3.2) rendu résistant aux jets d'eau est composé de fibres de PB.

8. Produit composite semi-fini selon la revendication 1, **caractérisé en ce que** le tissu non-tissé (3.1-3.2) rendu résistant aux jets d'eau est composé d'un mélange des fibres selon les revendications 2 à 7.

9. Produit composite semi-fini selon l'une des revendications 1 à 8, **caractérisé en ce que** les différentes couches (3.1, 3.2) du tissu non-tissé (3.1-3.2) rendu résistant aux jets d'eau sont composées de matières différentes selon l'une ou plusieurs des revendications 2 à 7.

10. Produit composite semi-fini selon les revendications 1 à 9, **caractérisé en ce que** la membrane est recouverte d'une masse adhésive en polyuréthane réticulant par humidité.

11. Méthode de fabrication d'un produit composite semi-fini pour la fabrication de vêtements protecteurs, comprenant les étapes suivantes :
mise à disposition d'une première couche (3.1) d'un tissu non-tissé rendu résistant aux jets d'eau d'un grammage de 80 g/m² ou inférieur ;
mise à disposition d'une deuxième couche (3.2) d'un tissu non-tissé rendu résistant aux jets d'eau, également d'un grammage de 80 g/m² ou inférieur ;
mise à disposition d'un tissu de doublure d'un grammage de 120 g/m² ou inférieur ;
assemblage des couches (3.1, 3.2) et du tissu de doublure (3.3), par exemple par piquage ;
recouvrement de l'assemblage piqué en tissus non-tissés (3.1, 3.2) et tissu de doublure (3.3), sur la face extérieure opposée au tissu de doublure du tissu non-tissé (3.1-3.2), par contrecollage d'une membrane semi-perméable (2) d'un grammage compris entre 20 et 30 g/m².

12. Méthode de fabrication d'un produit composite semi-fini selon la revendication 11, **caractérisée en ce qu'**avant le contrecollage de la membrane (2), une masse adhésive en polyuréthane réticulant par humidité est appliquée sur la membane et/ou le tissu non-tissé.
